(19) Europäisches Patentamt / European Patent Office / Office européen des brevets

(11) **EP 3 505 228 A1**

(12) **EUROPEAN PATENT APPLICATION**

(43) Date of publication:
03.07.2019   Bulletin 2019/27

(51) Int Cl.:
**B01D 53/84** (2006.01)    **B01D 53/86** (2006.01)
**B01D 53/78** (2006.01)

(21) Application number: **18215315.5**

(22) Date of filing: **21.12.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:   **26.12.2017   KR 20170180119**

(71) Applicant: **Samsung Electronics Co., Ltd.**
**Gyeonggi-do 16677 (KR)**

(72) Inventors:
 • **KANG, Changduk**
  **16678 Suwon-si (KR)**

 • **BYUN, Jongwon**
  **16678 Suwon-si (KR)**
 • **YANG, Dongsik**
  **16678 Suwon-si (KR)**
 • **PARK, Jinhwan**
  **16678 Suwon-si (KR)**
 • **SONG, Seunghoon**
  **16678 Suwon-si (KR)**

(74) Representative: **Grünecker Patent- und Rechtsanwälte**
**PartG mbB**
**Leopoldstraße 4**
**80802 München (DE)**

(54) **EXHAUST GAS DECOMPOSITION SYSTEM, COMPLEX EXHAUST GAS DECOMPOSITION SYSTEM INCLUDING THE SAME, MICROORGANISM, AND METHOD OF DECOMPOSING EXHAUST GAS**

(57)    Provided are an exhaust gas decomposition system, a complex exhaust gas decomposition system, and a method of decomposing an exhaust gas, wherein the exhaust gas decomposition system includes at least one of a bioreactor system that includes at least one of a bioreactor vessel; at least one of a first inlet supplying a first fluid into an interior of the vessel; at least one of a first outlet discharging the first fluid to an exterior of the vessel; at least one of a second inlet supplying a second fluid into the interior of the vessel; at least one of a second outlet discharging the second fluid to the exterior of the vessel; and at least one of a sparger located in the interior of the vessel and connected to the second inlet.

FIG. 1

**Description**

BACKGROUND

1. Field

The present disclosure relates to an exhaust gas decomposition system, and a method of decomposing an exhaust gas.

2. Description of the Related Art

Greenhouse gases, such as fluorinated gases emitted from industrial processes such as semiconductor processes, cause environmental problems including global warming, and thus techniques for decomposing these gases are needed. Often, exhaust gas is treated by a high-temperature or catalytic chemical decomposition method. Examples of a chemical decomposition method include a thermal decomposition method that decomposes an exhaust gas at a high temperature of 1400 °C or higher and a catalytic thermal oxidation method that oxidizes an exhaust gas by using a metal catalyst such as $Ce/Al_2O_3$. Such chemical decomposition methods require large-capacity equipment and consume a large amount of energy.

Therefore, there is a demand for new environment-friendly and economical methods of decomposing an exhaust gas.

SUMMARY

Provided herein is an exhaust gas decomposition system that includes at least one bioreactor vessel; at least one first inlet for supplying a first fluid containing a biological catalyst that catalyzes decomposition of a fluorine-containing compound into an interior of the vessel; at least one first outlet for discharging the first fluid to an exterior of the vessel; at least one second inlet for supplying a second fluid that contains a fluorine-containing compound into the interior of the vessel; at least one second outlet for discharging the second fluid to the exterior of the vessel; and at least one sparger located in the vessel and connected to the second inlet. The first inlet and the first outlet are arranged such that a first fluid flow moves in a first direction in the interior of the vessel; and the second inlet and the second outlet are arranged such that a second fluid flow moves inside the vessel in a second direction in the interior of the vessel that is different from the first direction. The sparger is disposed such that the first fluid exiting the sparger contacts the second fluid, whereby the fluorine-containing compound is decomposed. In some embodiments, the exhaust gas decomposition system further includes a first fluid supplier for supplying the first fluid to the exhaust gas decomposition system; a second fluid supplier for supplying the second fluid to the exhaust gas decomposition system; and a first collector and a second collector each for collecting a decomposition product released from the exhaust gas decomposition system.

Also provided is a method of decomposing a fluorinated compound by contacting a first fluid including a KCTC 13219BP strain of *Bacillus saitens* that decomposes fluorine-containing compounds with a second fluid including a fluorine-containing compound. The first fluid and second fluid can be contacted by sparging the second fluid into the first fluid, such as by supplying the first fluid and second fluid to the exhaust gas decomposition apparatus described herein, i.e. the exhaust gas decomposition apparatus described here may be used for contacting the first fluid and the second fluid.

Additional aspects will be set forth in part in the description which follows and, in part, will be apparent from the description, or may be learned by practice of the presented embodiments.

BRIEF DESCRIPTION OF THE DRAWINGS

These and/or other aspects will become apparent and more readily appreciated from the following description of the embodiments, taken in conjunction with the accompanying drawings in which:

FIG. 1 is a schematic view of an exhaust gas decomposition system according to an embodiment;
FIG. 2 is a schematic view of an exhaust gas decomposition system according to another embodiment;
FIG. 3 is a schematic view of an exhaust gas decomposition system according to another embodiment;
FIG. 4 is a schematic view of an exhaust gas decomposition system according to another embodiment;
FIG. 5 is a schematic view of an exhaust gas decomposition system according to another embodiment;
FIG. 6 is a schematic view of an exhaust gas decomposition system including a plurality of reactors that are connected in series;
FIG. 7 is a schematic view of an exhaust gas decomposition system including a plurality of reactors that are connected in parallel;

FIG. 8 is a schematic view of an exhaust gas decomposition system according to another embodiment;

FIG. 9 is a schematic view of an exhaust gas decomposition system used in Example 1;

FIG. 10 is a schematic view of an exhaust gas decomposition system used in Comparative Example 1; and

FIG. 11 is a graph illustrating decomposition rates of fluorine-containing compounds obtained from the exhaust gas decomposition systems of Example 1 and Comparative Example 1.

DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of" when preceding a list of elements, modify the entire list of elements and do not modify the individual elements of the list.

As used herein, like reference numerals in the drawings denote like elements, and thus their description will be omitted. Sizes of components in the drawings may be exaggerated for convenience of explanation. While such terms as "first," "second," etc., may be used to describe various components, such components must not be limited to the above terms. The above terms are used only to distinguish one component from another. For example, while not departing from the scope of the inventive concept, a first element may be referred to as "a second element", and a second element may be referred to as "a first element" in like manner. An expression used in the singular encompasses the expression of the plural, unless it has a clearly different meaning in the context.

The terms used herein are merely used to describe particular embodiments, and are not intended to limit the present inventive concept. An expression used in the singular encompasses the expression of the plural, unless it has a clearly different meaning in the context. As used herein, it is to be understood that the terms such as "including" "having" and "comprising" are intended to indicate the existence of the features, numbers, steps, actions, components, parts, ingredients, materials, or combinations thereof disclosed in the specification, and are not intended to preclude the possibility that one or more other features, numbers, steps, actions, components, parts, ingredients, materials, or combinations thereof may exist or may be added. Throughout the specification, it will be understood that when a component, such as a layer, a film, a region, or a plate, is referred to as being "on" another component, the component can be directly on the other component or intervening components may be present thereon. On the other hand, it will be understood that when a component, such as a layer, a film, a region, or a plate, is referred to as being "under" another component, the component can be directly attached under the other component or intervening components may be present therebelow. Hereinafter, example embodiments will be described in detail with reference to the attached drawings.

As used herein, the term "exhaust gas" refers to any and all types of gas including a fluorine-containing compound that may be released from a fixed or moving machine or equipment. For example, the exhaust gas may be a gas that is released from a semiconductor manufacturing process. The exhaust gas may be a mixture containing liquid or solid particles in addition to a pure gas.

Hereinafter example embodiments of exhaust gas decomposition systems, a complex exhaust gas decomposition system including the exhaust gas decomposition system, a microorganism strain and a method of using the system to decompose an exhaust gas will be described.

According to an embodiment, an exhaust gas decomposition system includes at least one bioreactor system including at least one bioreactor vessel; at least one first inlet for supplying a first fluid into the vessel; at least one first outlet for discharging the first fluid from the vessel; at least one second inlet for supplying a second fluid into the vessel; at least one second outlet for discharging the second fluid from the vessel; and at least one sparger connected to the second inlet in the vessel, wherein the first inlet and the first outlet are disposed such that a first fluid flow moves in a first direction in the interior of the vessel; the second inlet and the second outlet are disposed such that a second fluid flow moves in a second direction, which is different from the first direction, in the interior of the vessel; the sparger is disposed such that the first fluid and the second fluid contact each other, wherein the first fluid includes a biological catalyst that catalyzes decomposition of a fluorine-containing compound, and the second fluid includes the fluorine-containing compound. In some embodiments, the bioreactor vessel includes more than one (i.e., a plurality) of first inlets, first outlets, second inlets, and or second outlets.

In the exhaust gas decomposition system, a biological catalyst catalyzes the decomposition of a fluorine-containing compound, and thus environmentally-friendly decomposition of a fluorine-containing compound without the need for high temperatures, a large amount of heat, and/or a large amount of energy may be possible. Also, in the exhaust gas decomposition system, a contact area between the first fluid and the second fluid increases as the first fluid and the second fluid move in directions opposite to each other in a interior of a bioreactor vessel, and thus a rate of decomposition of a fluorine-containing compound may improve relative to other methods. Also, a contact area between the first fluid and the second fluid further increases due to a sparger located in the interior of the bioreactor vessel, and thus a rate of decomposing a fluorine-containing compound may further improve.

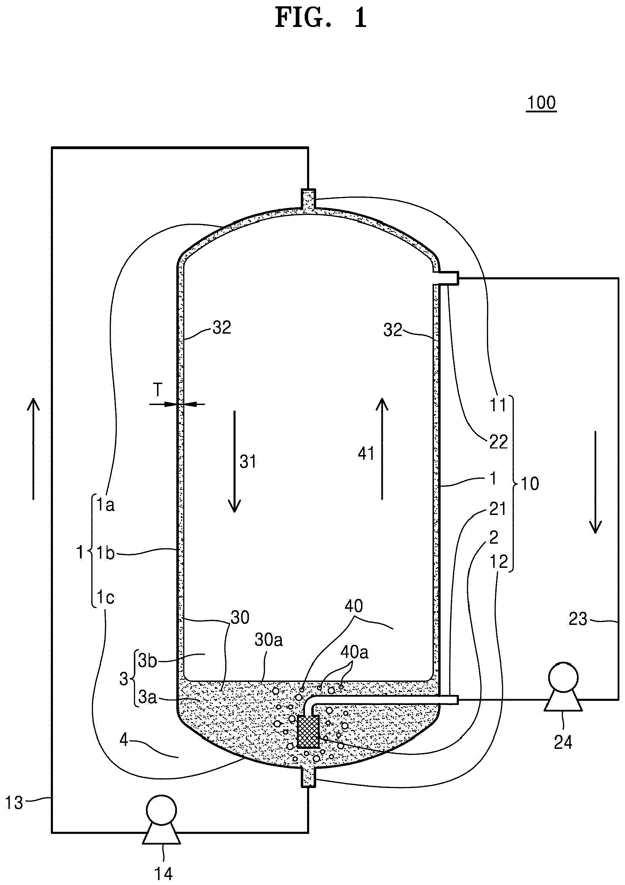

Referring to FIGS. 1 to 4, an exhaust gas decomposition system 100 includes at least one bioreactor system 10 including at least one bioreactor vessel 1; at least one first inlet 11 supplying a first fluid 30 into an interior 3 of the vessel 1; at least one first outlet 12 discharging the first fluid 30 into an exterior 4 of the vessel 1; at least one second inlet 21 supplying a second fluid 40 into the interior 3 of the vessel 1; at least one second outlet 22 discharging the second fluid 40 into the exterior 4 of the vessel 1; and at least one sparger 2 that is connected to the second inlet 21 in the interior 3 of the vessel 1, wherein the first inlet 11 and the first outlet 12 are disposed such that a first fluid flow is generated and moves in a first direction 31 in the interior 3 of the vessel 1, the second inlet 21 and the second outlet 22 are arranged such that a second fluid flow is generated and moves in a second direction 41, which is different from the first direction 31, in the interior 3 of the vessel 1, the sparger 2 is disposed such that the first fluid 30 and the second fluid 40 contact each other, the first fluid 30 includes a biological catalyst that decomposes a fluorine-containing compound, and the second fluid 40 includes a fluorine-containing compound. In the bioreactor system 10, the numbers of the first inlet 11, the first outlet 12, the second inlet 21, the second outlet 22, and the sparger 2 are not particularly limited and the bioreactor system 10 may include one or a plurality of each of those according to the required reaction conditions.

Referring to FIGS. 1 to 4, in the exhaust gas decomposition system 100, the first fluid 30 may be a liquid that includes a biological catalyst, and the second fluid 40 may be a gas that includes a fluorine-containing compound. In certain embodiments, in the interior 3 of the bioreactor vessel 1, the first fluid 30 may not be anchored on a fixed-bed such as a support and move in the first direction 31.

Referring to FIGS. 1 to 4, in the exhaust gas decomposition system 100, the bioreactor vessel 1 includes a side wall 1b, a lid 1a, and a bottom 1c. The lid 1a is positioned generally opposite the bottom 1c, and the lid 1a and bottom 1c are separated by the side wall 1b. At least one of the first inlet 11 and the second outlet 12 may be disposed directly on or adjacent to the lid 1a, at least one of the first outlet 11 and the second inlet 12 may be disposed directly on or adjacent to the bottom 1c, and the sparger 2 may be extended from the second inlet 21 and may be disposed in a bottom 1c direction. Due to the sparger 2 being extended from the second inlet 21 and disposed in a first direction towards the bottom 1c, bubbles 40a of the second fluid 40 are sprayed in a first direction towards the bottom 1c and then move to a second direction towards the lid 1a, where the bubbles 40a are gas including a fluorine-containing compound, and thus a period of time for the first fluid 30 and the second fluid 40 to contact each other may increase, which may result in further improvement of an exhaust gas decomposition efficiency. The side wall 1b, lid 1a, and bottom 1c in the bioreactor vessel 1 may be separate members that together constitute the bioreactor vessel 1 or may be integrally formed in one vessel body. In some embodiments, the side wall 1b has a generally cylindrical shape. In some embodiments, at least a part of a cross-section of the side wall 1b may be two substantially parallel straight lines spaced apart from each other. Cross-sections of the lid 1a and the bottom 1c may be a flat line or a curved line having a radius of curvature. A contour of the lid 1a and the bottom 1c may be formed or positioned to mate with a contour of the side wall 1b.

Referring to FIGS. 1 to 4, in the exhaust gas decomposition system 100, the interior 3 is defined by the side wall 1b, the lid 1a, and the bottom 1c, where the interior 3 includes a first interior region 3a that is defined by the bottom 1c, the side wall 1b adjacent to the bottom 1c, and a horizontal surface 30a of the first fluid 30 partially filling the interior 3; and a second interior region 3b that is disposed on the first interior region 3a. Also, the sparger 2 is disposed in the first interior region 3a. Thus, the sparger 2 may be positioned so as to be partially or fully immersed in the first fluid 30. The contact area between the first fluid 30 and the second fluid 40 increases as the bubbles 40a of the second fluid 40 are introduced through the sparger 2 into the first fluid 30 filling the first interior region 3a, and thus the exhaust gas decomposition efficiency may further improve.

Referring to FIGS. 1 to 4, in the exhaust gas decomposition system 100, the sparger 2 may be a microporous sparger having a pore size in a range of about 0.1 $\mu$m to about 100 $\mu$m, about 0.1 $\mu$m to about 90 $\mu$m, about 0.1 $\mu$m to about 80 $\mu$m, about 0.1 $\mu$m to about 70 $\mu$m, about 0.1 $\mu$m to about 60 $\mu$m, about 0.1 $\mu$m to about 50 $\mu$m, about 0.1 $\mu$m to about 40 $\mu$m, about 0.1 $\mu$m to about 30 $\mu$m, about 0.1 $\mu$m to about 20 $\mu$m, about 0.1 $\mu$m to about 10 $\mu$m, about 0.1 $\mu$m to about 5 $\mu$m, about 0.1 $\mu$m to about 3 $\mu$m, or about 0.1 $\mu$m to about 1 $\mu$m. The sparger 2 may be formed of a metal. For example, the sparger 2 may be formed of stainless steel (SUS).

Referring to FIGS. 1 to 4, the exhaust gas decomposition system 100 may further include a first circulation line 13 that connects one, preferably each of the first outlets 12 to one, preferably each of the first inlets 11 of the bioreactor system 10 and re-supplies at least a part of the first fluid 30 being released from the first outlet 12 to the first inlet 11. For example, the first circulation line 13 may be operated by using a first circulator 14. For example, the first circulator 14 may be a pump or a fan, but embodiments are not limited thereto, and any device available as a circulator in the art may be used. Since the first fluid 30 and the second fluid 40 may repeatedly contact each other in the interior 3 of the bioreactor vessel 1 due to the circulation of at least a part of the first fluid 30 into the interior 3 of the bioreactor vessel 1, a period of time for which the first fluid and the second fluid are in contact increases, and thus a rate of decomposition of a fluorine-containing compound may improve. In contrast, for example, when the first fluid 30 is supplied into the interior 3 of the bioreactor vessel 1 via the first inlet 11 and then discharged to the exterior 4 of the bioreactor vessel 1 via the first outlet 12, without the repeating circulation, a period of time of contacting the first fluid 30 and the second fluid 40 may be comparatively short, which may thus reduce a rate of decomposing a fluorine-containing compound.

Referring to FIGS. 1 to 4, the exhaust gas decomposition system 100 may further include a second circulation line 23 that connects one, preferably each of the second inlets 21 to one, preferably each of the second outlets 22 of the bioreactor system 10 and re-supplies at least a part of the second fluid 40 being discharged from the second outlet 22 to the second inlet 21. For example, the second circulation line 23 may be operated by using a second circulator 24. For example, the second circulator 24 may be a pump or a fan, but embodiments are not limited thereto, and any device available as a circulator may be used. Since the first fluid 30 and the second fluid 40 may repeatedly contact each other in the interior 3 of the bioreactor vessel 1 due to the circulation of at least a part of the second fluid 40 into the interior 3 of the bioreactor vessel 1, the duration of contact between the first fluid 39 and the second fluid 40 may comparatively increase, and thus a rate of decomposition of a fluorine-containing compound may improve. In contrast, for example, when the second fluid 40 is supplied into the interior 3 of the bioreactor vessel 1 via the second inlet 21 and then completely discharged to the exterior 4 of the bioreactor vessel 1 via the second outlet 22, without the repeating circulation, the duration of contact between the first fluid 30 and the second fluid 40 may be comparatively short, which may reduce a rate of decomposing a fluorine-containing compound.

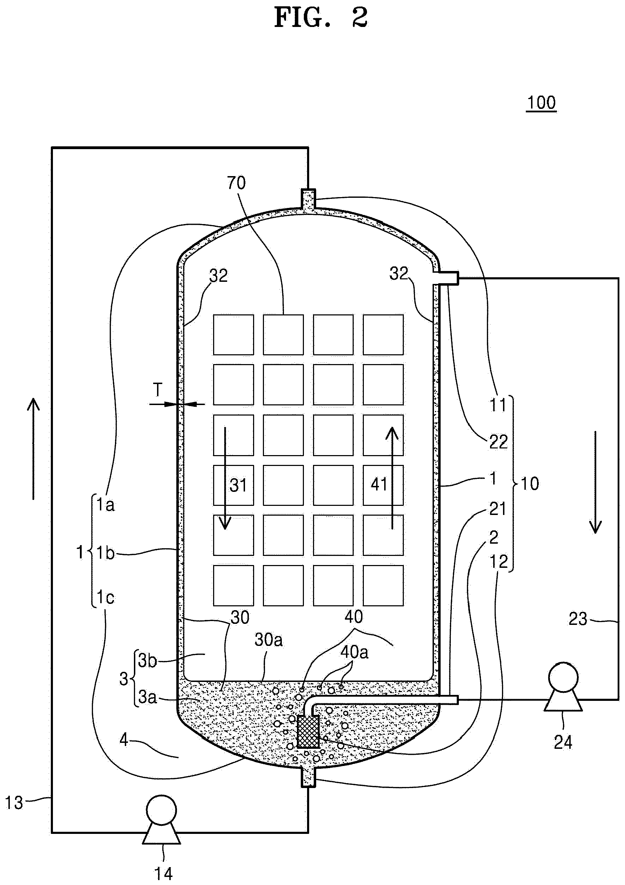

Referring to FIGS. 1 to 4, a bed or surface over which the first fluid flows may be provided in the exhaust gas decomposition system 100 so that the bioreactor system 10 may produce a first fluid flow in the form of a thin film. For example, the bed may be the side wall 1b of the bioreactor vessel 1. Referring to FIGS. 2, 3, 9 and 10, for example, the bed may be a side surface of the structure 70 disposed within the reactor 1.

For example, in the exhaust gas decomposition system 100, the first fluid flow moving in the first direction 31 may include first fluid flow thin films 32 that are substantially disposed parallel to the side wall 1b along the side wall 1b of the bioreactor vessel 1, where a thickness T of the first fluid flow thin film 32 is 10 mm or less, 9 mm or less, 8 mm or less, 7 mm or less, 6 mm or less, 5 mm or less, 4 mm or less, 3 mm or less, 2 mm or less, or 1 mm or less. The first fluid flow thin films 32 may be disposed in a second interior region 3b of the interior 3 of the bioreactor vessel and may contact the second fluid 40. When the first fluid 30 is in the form of a thin film when it contacts the second fluid 40, the contact area between the first fluid 30 and the second fluid 40 is increased, and thus a rate of decomposition of a fluorine-containing compound may improve. For example, a part of or the whole side wall 1b of the bioreactor vessel 1 that corresponds to the second interior region 3b of the interior 3 of the bioreactor vessel 1 may be covered with the first fluid flow thin film 32.

Referring to FIGS. 1 to 4, in the exhaust gas decomposition system 100, the second direction 41 in which the second fluid flow moves may be an opposite direction from the first direction 31 in which the first fluid flow moves. In the interior 3 of the bioreactor vessel 1 of the exhaust gas decomposition system 100, when the first fluid 30 and the second fluid 40 move in the opposite directions, a contact area between the first fluid 30 and the second fluid 40 substantially increases, and thus a rate of decomposition of a fluorine-containing compound may improve. For example, in the second internal region 3b of the interior 3 of the bioreactor vessel 1, the first fluid 30 and the second fluid 40 may move in directions opposite to each other. For example, the first direction 31 and the second direction 41 may be directions that are perpendicular to a horizontal surface 30a of the first fluid 30 filling a part of the interior 3 of the bioreactor vessel 1 but opposite directions.

Referring to FIGS. 1 to 4, a ratio of a volume occupied by the first fluid 30 and a volume occupied by the second fluid 40 in the interior 3 of the bioreactor vessel 1 may be in a range of about 1:1 to about 1:20, about 1:1 to about 1:15, about 1:1 to about 1:10, about 1:2 to about 1:9, about 1:3 to about 1:7, about 1:3 to about 1:6, or about 1:4 to about 1:5. When the first fluid 30 and the second fluid 40 has such volume ratio in the interior 3 of the bioreactor vessel 1, a rate of decomposition of a fluorine-containing compound may improve. When the relative volume of the second fluid 40 is too small, formation of fine bubbles of an exhaust gas in the second fluid 40 and a frequency of contact with a biological catalyst may decrease. When the relative volume of the second fluid 40 is too large, a contact area of the second fluid 40 with a thin film of a first fluid 30 at an upper part of the bioreactor vessel 1, e.g, a part of the bioreactor bassel which is more adjacent to the lid 1a of the reactor 1 than the bottom 1c of the reactor 1, may decrease since the thin film of a first fluid may not coverall surface of an upper part of the bioreactor vessel 1.

Referring to FIGS. 1 to 4, a rate of supplying the second fluid 40 to the interior 3 of the bioreactor vessel 1 via the second inlet 21 may be in a range of about 0.05 wm to about 50 vvm, about 0.1 vvm to about 45 vvm, about 0.5 wm to about 40 wm, about 1.0 vvm to about 35 vvm, about 2.0 wm to about 30 wm, about 3.0 wm to about 25 vvm, about 3.0 vvm to about 20 vvm, about 4.0 wm to about 20 wm, about 5.0 vvm to about 15 vvm, about 6.0 vvm to about 14 wm, about 7.0 wm to about 13 vvm, or about 8.0 vvm to about 12 vvm. The rate of supplying the second fluid 40 denotes a volume of the second fluid 40 circulated per a unit volume of the first fluid 30 per minute (wm, volume per volume per minute). For example, 10 vvm denotes that 10 L of the second fluid 40 is supplied while 1 L of the first fluid 30 is supplied to the interior 3 of the bioreactor vessel 1 per 1 minute. When the rate of supplying the second fluid 40 to the interior 3 of the bioreactor vessel 1 via the second inlet 21 is within these ranges, a rate of decomposition of a fluorine-containing compound may further improve. When the rate of supplying the second fluid 40 is too slow, the rate of decomposing a fluorine-containing compound may decrease, i.e., the total time needed to decompose the fluorine-containing compound in a given volume may increase, due to an increase in a residence time of the second fluid 40 in the interior 3 of the bioreactor vessel 1, and when the rate of supplying the second fluid 40 is too fast, an efficiency of decomposing a fluorine-containing compound may be reduced due to a decrease in of the duration of contact between an exhaust gas and a biological catalyst.

Referring to FIGS. 2, 3, 9, and 10, the exhaust gas decomposition system 100 may further include a structure 70 that increases the surface area within the vessel and increases the contact area between the first fluid 30 and the second fluid 40 in the interior 3 of the vessel 1. For example, the structure 70 may be at least one selected from a reflux tube and a filler, but embodiments are not limited thereto, and any structure that may increase a contact area between the first fluid 30 and the second fluid 40 may be used. For example, the structure 70 may serve as a bed that may produce a first fluid flow in the form of a thin film, when the sprayed first fluid flows along the side surface of the structure 70. Although not particularly limited, a volume occupied by the structure 70 in the total volume of the interior 3 of the bioreactor vessel 1 may be, for example, in a range of about 1 % to about 99 %, about 5 % to about 95 %, about 10 % to about 90 %, about 20 % to about 80 %, or about 30 % to about 70 %. For example, the structure 70 may be located in the second interior region 3b. When the structure 70 is located in the interior 3 of the bioreactor vessel 1, a contact area between the first fluid 30 and the second fluid 40 may further increase, and thus a rate of decomposition of a fluorine-containing compound may improve.

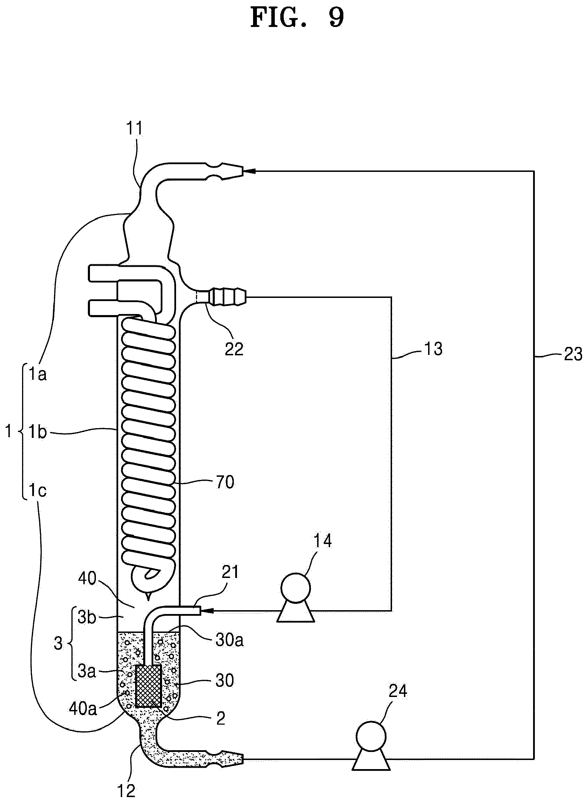

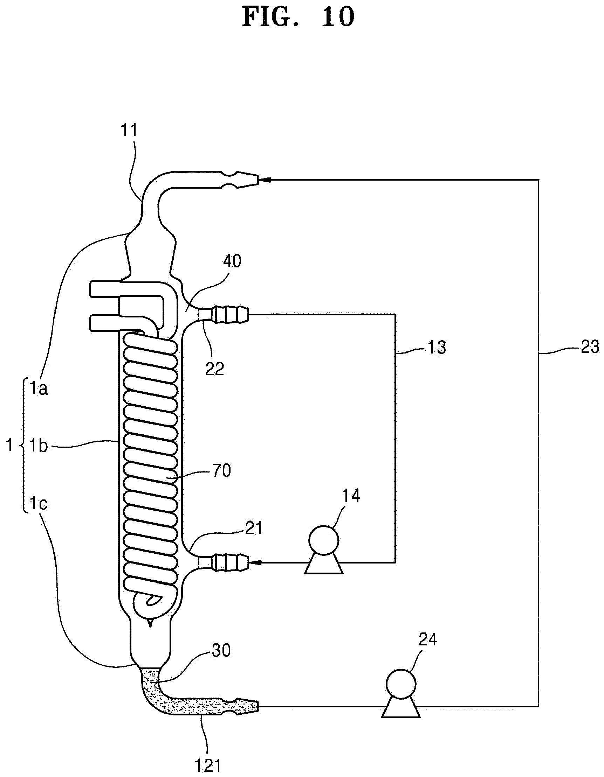

Referring to FIGS. 9 and 10, a shape of the reflux tube is not particularly limited, and any structure that is connected to the bioreactor vessel 1 and may reflux a coolant into the interior 3 of the bioreactor vessel 1 may be used. For example, the reflux tube may be a straight tube and/or a coiled tube. In some embodiments, the reflux tube may have a structure that is same with or similar to a reflux tube of an Allihn condenser, a reflux tube of a Graham condenser, a reflux tube of a Dimroth condenser, or a reflux tube of a Friedrichs condenser.

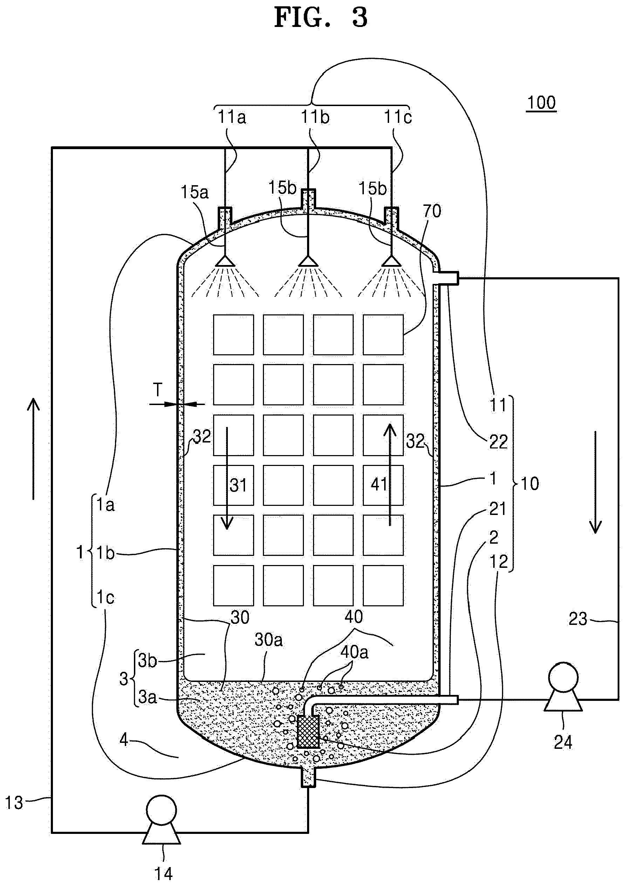

Referring to FIGS. 2 and 3, a filler may have a regular or irregular shape at least a portion of which may be empty (void volume). A filler is a structure having a high microporosity or porosity (e.g., a porous or microporous material, such as a porous or microporous particulate material). A filler may be connected to or otherwise housed within the bioreactor vessel 1. Thus the filler may be fixed to the interior 3 of the bioreactor vessel 1, or may be inserted into the interior 3 of the bioreactor vessel 1. The filter may be durable, consumable, renewable, and/or replaceable. Thus, in some embodiments, the filler may be separated from the bioreactor vessel 1 to facilitate replacement of the filler. Examples of fillers include porous polymer particles such as porous polypropylene particles; or porous inorganic particles such as zeolite, but embodiments are not limited thereto, and any porous material available as a filler in the art may be used. A volume of the porous polymer particle or the porous inorganic particle is not particularly limited but may be in a range of about 1 mm$^3$ to about 1000 cm$^3$, about 1 mm$^3$ to about 100 cm$^3$, about 1 mm$^3$ to about 10 cm$^3$, about 1 mm$^3$ to about 1 cm$^3$, or about 1 mm$^3$ to about 0.1 cm$^3$. A porosity of the porous polymer particle or the porous inorganic particle is not particularly limited but may be in a range of about 1 % to about 99 %, about 5 % to about 95 %, about 10 % to about 90 %, about 20 % to about 80 %, or about 30 % to about 70 %. The porosity denotes a volume occupied by pores in the total volume of the particles.

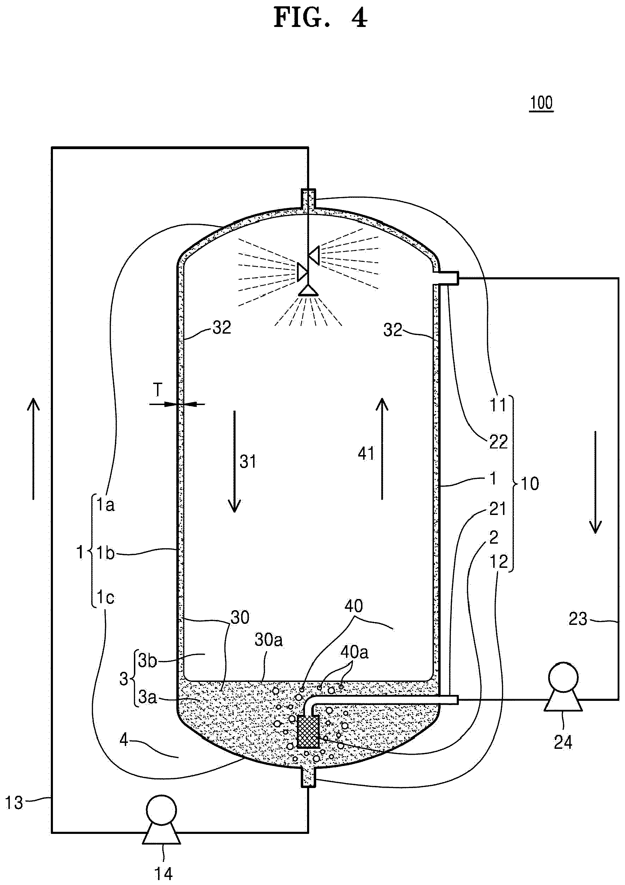

Referring to FIGS. 3 and 4, in the exhaust gas decomposition system 100, at least one of first inlets 11a, 11b, and 11c permits fluid flow into the second interior region 3b of the interior 3 of the bioreactor vessel 1, and the first fluid 30 may be supplied via at least one of first inlets 11a, 11b, and 11c. When the first fluid 30 is supplied by the at least one of first inlets 11a, 11b, and 11c, the first fluid 30 may be evenly supplied to the second interior region 3b. Also, the first fluid 30 forms a thin film (not shown) having a substantially homogeneous thickness on a surface of the structure 70 disposed in the second interior region 3b, and thus an homogeneous rate of decomposing a fluorine-containing gas may be obtained within the bioreactor vessel 1. Also, the exhaust gas decomposition system 100 comprises at least one sprayer 15a, 15b, and 15c that is connected to each of the at least one of first inlets 11a, 11b, and 11c, and thus at least one sprayer 15a, 15b, and 15c that spray the first fluid 30 may be included in the second interior region 3b. A direction of the sprayers 15a, 15b, and 15c spraying the first fluid 30 is not limited, and the sprayers 15a, 15b, and 15c may rotate and thus may spray the first fluid 30 in every direction.

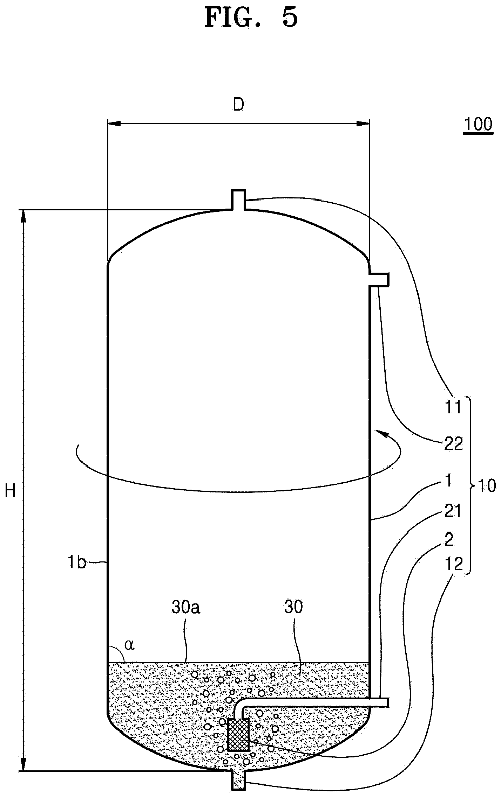

Referring to FIG. 5, in the exhaust gas decomposition system 100, an aspect ratio (H/D) of a length H of the vessel 1 with respect to a diameter D of the bioreactor vessel 1 may be 2 or higher. When the aspect ratio of the vessel 1 is 2 or higher, a contact area and/or a detention period of the first fluid 30 and the second fluid 40 increase, and thus a rate of decomposition of a fluorine-containing compound may improve. For example, the aspect ratio of the vessel 1 may be 3 or higher, 4 or higher, 5 or higher, 10 or higher, 15 or higher, 20 or higher, 25 or higher, or 30 or higher. For example, the aspect ratio of the vessel 1 may be 100 or lower, 70 or lower, 60 or lower, 50 or lower, or 40 or lower.

Referring to FIG. 5, in the exhaust gas decomposition system 100, an angle (α) formed by the side wall 1b of the bioreactor vessel 1 and the horizontal surface 30a of the first fluid 30 filling the interior 3 of the vessel 1 may be in a range of about 30° to about 150°, about 40° to about 140°, about 50° to about 130°, about 60° to about 120°, about 70° to about 110°, about 75° to about 105°, about 80° to about 100°, or about 85° to about 95°. For example, an angle formed by the side wall 1b of the bioreactor vessel 1 and the horizontal surface 30a of the first fluid 30 filling the interior 3 of the vessel 1 may be 90°. When the angle formed by the side wall 1b of the bioreactor vessel 1 and the horizontal (bottom) surface 30a of the first fluid 30 filling the interior 3 of the vessel 1 is within these ranges, a first fluid flow thin film (not shown) may be easily formed at a large area on the side wall 1b, which may result in improvement of a rate of decomposing a fluorine-containing compound.

Referring to FIG. 5, a reactor 10 in the exhaust gas decomposition system 100 may rotate. For example, in the exhaust gas decomposition system 100, the reactor 10 may rotate around a longitudinal axis H of the reactor 10. A rotating direction and a rotating rate of the reactor 10 may be appropriately selected within ranges that increase a contact area between a first fluid 30 and a second fluid in the interior of the reactor 10. For example, a rotating speed of the reactor 10 may be in a range of about 0.01 rpm to about 200 rpm, about 0.05 rpm to about 150 rpm, about 0.1 rpm to about 100 rpm, about 0.1 rpm to about 90 rpm, about 0.1 rpm to about 80 rpm, about 0.1 rpm to about 70 rpm, about 0.1 rpm to about 60 rpm, about 0.1 rpm to about 50 rpm, about 1 rpm to about 40 rpm, about 0.1 rpm to about 30 rpm, about 0.1 rpm to about 20 rpm, or about 0.1 to about 10 rpm.

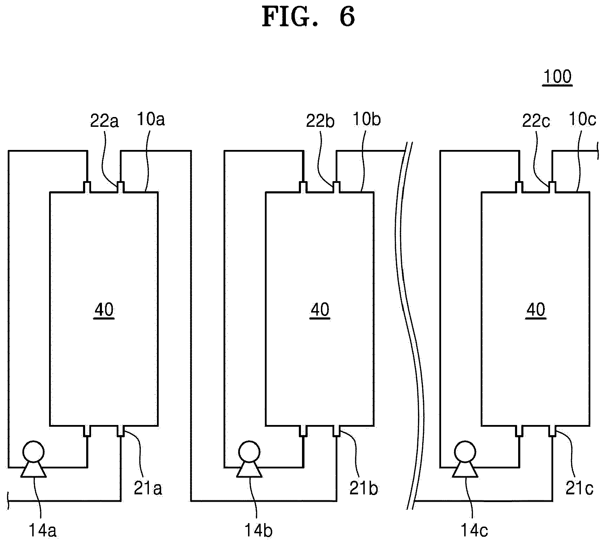

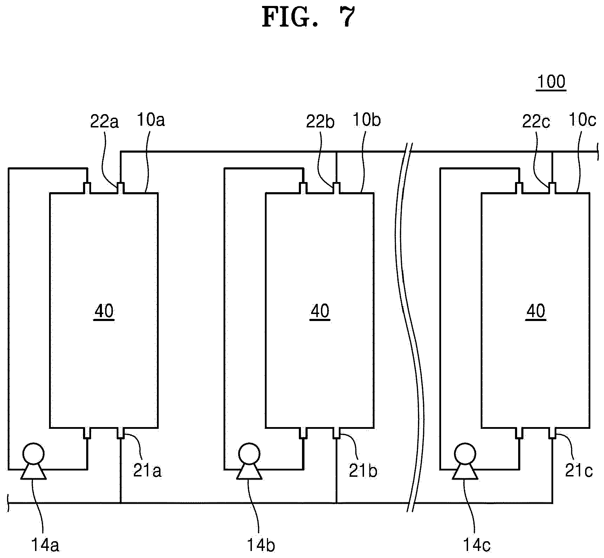

Referring to FIGS. 6 and 7, in the exhaust gas decomposition system 100, a plurality of bioreactor systems 10a, 10b, and 10c may be connected in series or in parallel, which may result in improvement of a rate of decomposing a fluorine-containing compound.

Referring to FIG. 6, in the plurality of bioreactor systems 10a, 10b, and 10c that are connected in series in the exhaust gas decomposition system 100, a first fluid (not shown) or a second fluid 40 discharged from one vessel 10a may be sequentially supplied to another system 10b. As the number of the bioreactor systems 10a, 10b, and 10c connected in series increases, the duration or an area of contact between the first fluid (not shown) and the second fluid 40 increases, and thus a rate of decomposing a fluorine-containing compound may increase. For example, the second fluid 40 may be supplied to a first bioreactor system 10a via a second inlet 21a, discharged via a second outlet 22a, supplied to a second bioreactor system 10b via a second inlet 21b, and discharged again via the second outlet 22b. After undergoing the plurality of bioreactor systems 10a, 10b, and 10c in this manner, the second fluid 40 may be supplied to the last bioreactor system 10c via the second inlet 21c and discharged via the second outlet 22c.

Referring to FIG. 7, in the plurality of bioreactor systems 10a, 10b, and 10c that are connected in parallel in the exhaust gas decomposition system 100, a first fluid (not shown) or a second fluid 40 may be simultaneously supplied to the plurality of bioreactor systems 10a, 10b, and 10c and may be simultaneously discharged from the plurality of bioreactor systems 10a, 10b, and 10c. As the number of the bioreactor systems 10a, 10b, and 10c connected in parallel increases, a duration of or an area of contact between the first fluid (not shown) and the second fluid 40 increases, and thus a rate of decomposing a fluorine-containing compound may increase. For example, the second fluid 40 may be simultaneously supplied to the plurality of bioreactor systems 10a, 10b, and 10c via the second inlets 21a, 21b, and 21c and may be simultaneously discharged from the plurality of bioreactor systems 10a, 10b, and 10c via the second outlets 22a, 22b, and 22c. Although not shown in the drawing, the dischaged second fluid may be simultaneously re-supplied to the plurality of bioreactor systems 10a, 10b, and 10c by a circulation line to improve a rate of decomposing a fluorine-containing compound.

Referring to FIGS. 1 to 7, in the exhaust gas decomposition system 100, a temperature of the interior of the vessel 1 may be in a range of about 20 °C to about 50 °C, about 20 °C to about 45 °C, about 20 °C to about 40 °C, about 20 °C to about 35 °C, or about 20 °C to about 30 °C, and a pressure of the interior of the vessel 1 may be in a range of about 0.9 atm to about 1.1 atm, about 0.95 atm to about 1.05 atm, or about 1 atm. Since a biological catalyst is used in the exhaust gas decomposition system 100, a fluorine-containing compound may be decomposed at a relatively low temperature and atmospheric pressure. A rate of decomposing a fluorine-containing compound may increase within these temperature ranges and pressure ranges of the interior of the vessel 1.

Referring to FIGS. 1 to 7, in the exhaust gas decomposition system 100, a rate of decomposing a fluorine-containing compound after 48 hours may be 10 % or higher, 12 % or higher, 15 % or higher, 18% or higher, 20% or higher, or 24% or higher.

Referring to FIGS. 1 to 7, in the exhaust gas decomposition system 100, a solubility of a fluorine-containing compound in water at 20 °C may be 0.01 vol% or lower, 0.009 vol% or lower, 0.008 vol% or lower, 0.007 vol% or lower, or 0.006 vol% or lower. That is, substantially, the fluorine-containing compound may be insoluble in a liquid that includes a biological catalyst, such as water. Thus, in the exhaust gas decomposition system 100, despite that a fluorine-containing compound is insoluble in a liquid including a biological catalyst, a rate of decomposition of a fluorine-containing compound may improve by providing an increased contact area and contact time between the liquid including the fluorine-containing compound and the biological catalyst.

Referring to FIGS. 1 to 7, in the exhaust gas decomposition system 100, the first fluid including the biological catalyst may be present in a medium including at least one selected from an enzyme and a microorganism that catalyzes decomposition of a F-C bond. A type of the medium is not particularly limited, and any medium known in the art in which an enzyme or a microorganism including the enzyme may be used. The medium may be, for example, an LB medium. Since the biological catalyst catalyzes decomposition of the F-C bond, the fluorine-containing compound contacting the biological catalyst may be decomposed.

For example, the biological catalyst may include a microorganism that belongs to the genus *Bacillus.* For example, the microorganism included in the biological catalyst may be a *Bacillus saitens* strain.

Also, the biological catalyst may include a recombinant microorganism including genetic modification, which increases an activity of 2-haloacid dehalogenase (HAD). For example, 2-haloacid dehalogenase may be one derived from strains of the group consisting of *Bacillus saitens, Bacillus cereus, Bacillus thuringiensis, Bacillus megaterium,* and *Pseudomonas saitens,* but embodiments are not limited thereto, and any strain including 2-haloacid dehalogenase in the art may be used. For example, the recombinant microorganism may belong to the genus *Escherichia,* the genus *Bacillus,* or the genus *Pseudomonas,* but embodiments are not limited thereto, and any recombinant microorganism available in the art may be used.

Referring to FIGS. 1 to 7, in the exhaust gas decomposition system 100, the interior 3 of the vessel 1 may include oxygen or may not include oxygen according to a type of the microorganism including a biological catalyst. For example, when the biological catalyst includes an anaerobic microorganism, the interior 3 of the vessel 1 will not include oxygen or air. For example, when the biological catalyst includes an aerobic microorganism, the interior 3 of the vessel 1 may include oxygen or air.

Referring to FIGS. 1 to 7, in the exhaust gas decomposition system 100, the fluorine-containing compound may be a compound that is represented by one of Formulae 1 to 3:

Formula 1 $\quad$ $C(R_1)(R_2)(R_3)(R_4)$

Formula 2 $\quad$ $(R_5)(R_6)(R_7)C-[C(R_{11})(R_{12})]_n-C(R_8)(R_9)(R_{10})$

Formula 3 $\quad$ $S(R_{13})(R_{14})(R_{15})(R_{16})(R_{17})(R_{18})$

In Formulae 1 to 3, n is an integer of 0 to 10; $R_1$, $R_2$, $R_3$, and $R_4$ are each independently F, Cl, Br, I, or H, wherein at least one of $R_1$, $R_2$, $R_3$, and $R_4$ is F; $R_5$, $R_6$, $R_7$, $R_8$, $R_9$, $R_{10}$, $R_{11}$, and $R_{12}$ are each independently F, Cl, Br, I, or H, wherein at least one of $R_5$, $R_6$, $R_7$, $R_8$, $R_9$, $R_{10}$, $R_{11}$, and $R_{12}$ is F; and $R_{13}$, $R_{14}$, $R_{15}$, $R_{16}$, $R_{17}$, and $R_{18}$ are each independently F, Cl, Br, I, or H, wherein at least one of $R_{13}$, $R_{14}$, $R_{15}$, $R_{16}$, $R_{17}$, and $R_{18}$ is F.

Referring to FIGS. 1 to 7, in the exhaust gas decomposition system 100, the fluorine-containing compound may be a compound that is represented by one of Formulae 4 to 6:

Formula 4 $\quad$ $C(R_{21})(R_{22})(R_{23})(R_{24})$

Formula 5 $\quad$ $(R_{25})(R_{26})(R_{27})C-[C(R_{31})(R_{32})]_m-C(R_{28})(R_{29})(R_{30})$

Formula 6 $\quad$ $S(R_{33})(R_{34})(R_{35})(R_{36})(R_{37})(R_{38})$

In Formulae 4 to 6, m is an integer of 0 to 5; $R_{21}$, $R_{22}$, $R_{23}$, and $R_{24}$ are each independently F or H, wherein at least one of $R_{21}$, $R_{22}$, $R_{23}$, and $R_{24}$ is F; $R_{25}$, $R_{26}$, $R_{27}$, $R_{28}$, $R_{29}$, $R_{30}$, $R_{31}$, and $R_{32}$ are each independently F or H, wherein at least one of $R_{25}$, $R_{26}$, $R_{27}$, $R_{28}$, $R_{29}$, $R_{30}$, $R_{31}$, and $R_{32}$ is F; and $R_{33}$, $R_{34}$, $R_{35}$, $R_{36}$, $R_{37}$, and $R_{38}$ are each independently F or H, wherein at least one of $R_{33}$, $R_{34}$, $R_{35}$, $R_{36}$, $R_{37}$, and $R_{38}$ is F.

For example, in the exhaust gas decomposition system 100, the fluorine-containing compound may include at least one selected from $CH_3F$, $CH_2F_2$, $CHF_3$, $CF_4$, and $SF_6$.

According to another embodiment, the exhaust gas decomposition system further includes a first fluid supplier that supplies a first fluid to the exhaust gas decomposition system; a second fluid supplier that supplies a second fluid to the exhaust gas decomposition system; and a first collector and a second collector that collect a decomposition product discharged from the exhaust gas decomposition system. When the exhaust gas decomposition system further includes these other devices, the exhaust gas decomposition system may more effectively decompose an exhaust gas. The first fluid supplier and the second fluid supplier are forwarding systems, devices, or units that transfer the first fluid and the second fluid to the exhaust gas decomposition system, respectively. The first fluid supplier may include a seed culture medium, but embodiments are not limited thereto. The second fluid supplier may include a pre-processor, which removes impurities contained in the first fluid; a tank including an exhaust gas; and/or a vent line (for example, of an industrial plant), but embodiments are not limited thereto. For example, the pre-processor may be a scrubber or a fabric filter. The pre-processor denotes a system, a device, or a unit that pre-processes an exhaust gas by removing some large-sized impurities from the exhaust gas supplied to the exhaust gas decomposition system. The first and second collectors are systems, devices, or units that partially or fully collects decomposition products discharged from the exhaust gas decomposition system. The first and second collectors may each include a condenser and/or a water bath, but embodiments are not limited thereto. For the sake of clarity, the exhaust gas decomposition system further comprising first and second collectors may be referred to as an exhaust gas decomposition complex.

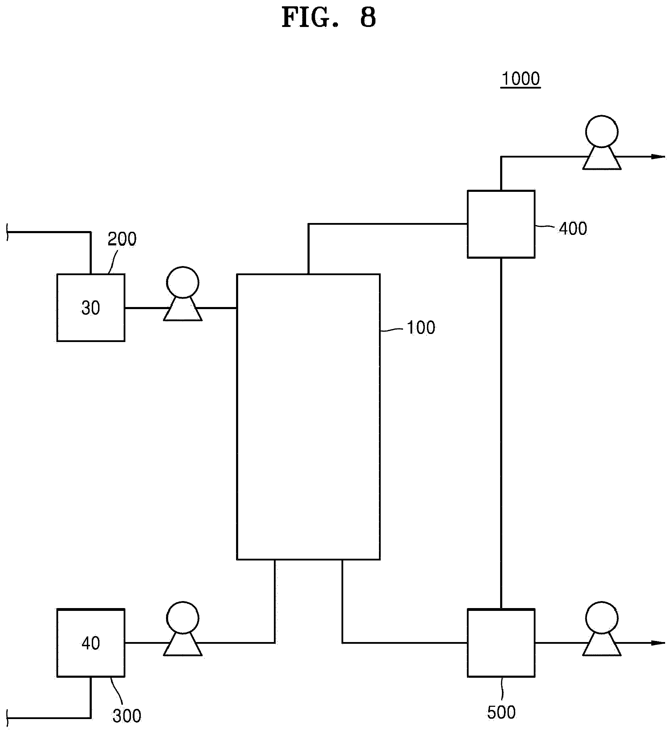

Referring to FIG. 8, an exhaust gas decomposition complex 1000 includes an exhaust gas decomposition system 100; a first fluid supplier 200 that supplies a first fluid 30 to the exhaust gas decomposition system 100; a second fluid supplier 300 that supplies a second fluid 40 to the exhaust gas decomposition system 100; and a first collector 400 and a second collector 500 that collect decomposition products released from the exhaust gas decomposition system 100.

Referring to FIG. 8, in the exhaust gas decomposition complex 1000, the first fluid supplier 200 may include a seed culture medium, e.g., a concentration of the strain in the LB medium is 5.0 or greater based on OD@600nm. A biological catalyst, e.g., a microorganism, may be cultured in a high concentration in the seed culture medium. When a microorganism is cultured in a high concentration, a rate of decomposition of a fluorine-containing compound in the exhaust gas decomposition system 100 may improve. In the exhaust gas decomposition complex 1000, the second fluid supplier 300 may include a pre-processor. For example, the pre-processor may be a scrubber or a fabric filter. The pre-processor denotes a system, a device, or a unit that pre-processes an exhaust gas by removing some large-sized impurities from the exhaust gas supplied to the exhaust gas decomposition system. In the scrubber, solid particles or impurities of hydrochloric acid or hydrofluoric acid other than the fluorine-containing compound in the exhaust gas may be collected to purify the exhaust gas. When the impurities are removed in the scrubber, a purity of the fluorine-containing compound in the second fluid may increase, which may result in improvement of a rate of decomposing a fluorine-containing compound. In the exhaust gas decomposition complex 1000, the first collector 400 may include a condenser. The first collector 400 is a device that collects gas exhausted from the exhaust gas decomposition system 100 and thus may liquefy the gas by using the condenser. For example, a boiling point of a hydrofluoric acid (HF) gas is as low as 19.5 °C, and thus the hydrofluoric acid (HF) gas may be collected by liquefying the hydrofluoric acid (HF) gas into a liquid hydrofluoric acid or may provide the hydrofluoric acid (HF) gas to the second collector 500 by lowering a temperature of the gas exhausted from the exhaust gas decomposition system 100 to 19 °C or lower in the first collector 400 by using the condenser. In the exhaust gas decomposition complex 1000, the second collector 500 may include a residual liquid processor that neutralizes a residual liquid discharged from one of the exhaust gas decomposition system 100 and the first collector 400. For example, a decomposition product in the state of liquid discharged from a lower part of the exhaust gas decomposition system 100 may include liquid hydrofluoric acid (HF), a decomposition product liquefied in the first collector 400 may also include liquid hydrofluoric acid (HF), and a base such as $Ca(OH)_2$ may be added to the liquid hydrofluoric acid (HF) to precipitate a salt in the form of $CaF_2$ to collect fluoride ions. Water ($H_2O$), which is a product other than $CaF_2$, is harmless to the environment. The decomposition products released from the exhaust gas decomposition system 100 may include at least one selected from HF and a hydrocarbon gas. A decomposition product in a gaseous state may be released through an upper part of the exhaust gas decomposition system 100 and then supplied to the first collector 400. A decomposition product in a liquid state may be discharged through a lower part of the exhaust gas decomposition system 100 and then supplied to the second collector 500.

Referring to FIGS. 1 to 7, in the exhaust gas decomposition system 100, the biological catalyst may contain a KCTC 13219 BP strain of *Bacillus saitens* capable of catalyzing decomposition of a fluorine-containing compound, such as, for example, fluorinated methane.

The strain may include genetic modification that increases activity of 2-haloacid dehalogenase (HAD). HAD catalyzes a chemical reaction of 2-halogenic acid + $H_2O$ ⇔ 2-hydroxylic acid + halide. Thus, two substrates of this enzyme are 2-halogenic acid and $H_2O$, and two products of this enzyme are 2-hydroxylic acid and halide. This enzyme may belong to a family of hydrolase that acts on a halide bond in a carbon-halide compound. However, a microorganism decreasing a concentration of a fluorine-containing compound is not limited to this particular mechanism. The genetic modification may increase the number of copies of genes encoding HAD. The genes encoding HAD may include exogenous genes. The genes may derive from the genus *Bacillus,* the genus *Pseudomonas,* the genus *Azotobacter,* the genus *Agrobacterium,* and genus *Escherichia.* The genes may derive from a KCTC 13219 BP strain of *Bacillus cereus, Bacillus thuringiensis, Bacillus megaterium,* or *Bacillus saitens.* HAD may belong to EC 3.8.1.2.

The genetic modification may increase the number of copies of genes encoding a polypeptide having a sequence identity of at least 95 % with an amino acid sequence of SEQ ID NO: 1. The gene may have a sequence identity of at least 95 % with a nucleotide sequence of SEQ ID NO: 2. The genetic modification may include introducing a gene that encodes HAD, or, for example, introducing the gene via a vehicle such as a vector. The gene that encodes HAD may exist in or outside of a chromosome. The number of the introduced genes encoding HAD may be at least 2, for example, 2 or more, 5 or more, 10 or more, 20 or more, 50 or more, 100 or more, or 1000 or more.

The microorganism may decrease a concentration of a fluorine-containing compound in a sample by decomposing a fluorine-containing compound such as fluorinated methane. Such a decrease result from the introduction of a hydroxyl group to carbon as the catalyst acts on a C-F or C-H bond of the fluorine-containing compound or accumulation of the fluorine-containing compound in cells of the microorganism. Such a decrease may also result from the breaking of a C-F bond of the fluorine-containing compound, thus converting the fluorine-containing compound into a different material, or the accumulation of the fluorine-containing compound in cells. The sample including a fluorine-containing compound may be in a gaseous state or a liquid state, or a mixture of gas and liquid, optionally including solid or liquid particles. The sample may be factory waste water or waste. The sample may include a fluorine-containing compound. For example, the sample may be an exhaust gas that is released from a factory. The fluorine-containing compound may be a compound represented by one of Formulae 1 to 3. For example, the fluorine-containing compound may be $CF_4$, $CHF_3$, $CH_2F_2$, $CH_3F$, or a mixture thereof.

According to another embodiment, a method of decomposing an exhaust gas includes contacting a first fluid including a KCTC 13219BP strain of *Bacillus saitens* with a second fluid including a fluorine-containing compound. For example, the method of decomposing an exhaust gas may include contacting a KCTC 13219BP strain of *Bacillus saitens* and a sample containing fluorinated methane represented by CHnF4-n (where N is an integer of 0 to 3) to decrease a concentration of fluorinated methane in the sample.

The first fluid including a KCTC 13219BP strain of *Bacillus saitens* and the second fluid including a fluorine-containing compound are the same as described above.

In the method of decomposing an exhaust gas, the contacting of the first fluid and the second fluid may be performed in a liquid environment or a solid environment. For example, the contacting may be performed by mixing the second fluid with the first fluid including a culture of a microorganism cultured in a medium. The culture may be performed in conditions under which the microorganism amplifies. The contacting may be performed in a sealed vessel. The contacting may be performed when a growth phase of the microorganism is an exponential phase or a stationary phase. The culture may be performed in aerobic or anaerobic conditions. The contacting may be performed in conditions under which a microorganism may survive in a sealed vessel. The conditions under which a microorganism may survive are conditions under which a microorganism may amplify or stay in a resting state.

In the method of decomposing an exhaust gas, the second fluid may be liquid, gas, or a mixture thereof, optionally including solid or liquid particles. The second fluid may be factory waste water or factory waste. The second fluid includes those actively contacting a culture of a microorganism as well as those passively contacting the culture. In the method of decomposing an exhaust gas, the contacting of the first fluid and the second fluid may be performed by sparging the second fluid in the first fluid. The sparging may be performed by using a sparger. For example, the contacting may be performed by sparging the second fluid in a culture solution of a microorganism. The second fluid may be sparged through a medium or a culture solution. The sparging may be blowing from a lower part to a lower part of the medium or culture solution or blowing from an upper part to a lower part of the medium or culture solution. The sparging may be injecting the second fluid while forming air bubbles.

In the method of decomposing an exhaust gas, the contacting may be performed in a batch or in a continuous manner. For example, the contacting may include contacting the second fluid and a fresh microorganism (e.g., microorganism not yet exposed to the fluorine-compound containing fluid) having genetic modification to enhance activity of HAD. The contacting with a fresh microorganism may be performed at least twice, or, for example, 2, 3, 5, or 10 times or more. The contacting may be continued or repeated for a period of time until the desired decreased concentration of fluorinated methane in the sample is achieved.

In the method of decomposing an exhaust gas, a microorganism may further include genetic modification that enhances activity of HAD. The genetic modification may increase the number of copies of genes encoding HAD. The microorganism may be of a strain that includes exogenous genes encoding HAD. The genes may derive from the genus *Bacillus,* the genus *Pseudomonas,* the genus *Azotobacter,* the genus *Agrobacterium,* or the genus *Escherichia.* The genes may derive from a KCTC 13219 BP strain of *Bacillus cereus, Bacillus thuringiensis, Bacillus megaterium,* or *Bacillus saitens.* HAD may belong to EC 3.8.1.2.

The method of decomposing an exhaust gas may be performed in an exhaust gas decomposition apparatus as decribed herein. For instance, in some embodiments, the first fluid and second fluid are contacted in a bioreactor vessel comprising one or more first inlets, one or more second inlets, one or more first outlets, and one or more second outlets, and further comprising one or more spargers inside the bioreactor vessel and connected to the one or more second inlets. The first fluid is introduced into the bioreactor vessel through one or more first inlets and discharged through one or more first outlets; and the second fluid is introduced into the bioreactor vessel though one or more second inlets and discharged through one or more second outlets. The second fluid flows through the sparger and contacts the first fluid inside the bioreactor vessel. Thus, for instance, the first fluid partially fills the interior of the vessel; and the sparger is immersed in the first fluid. The fluids can be introduced in under the conditions described above with respect to the reactor (e.g., direction of flow, flow rates, volumes, temperature, pressure, etc.). The sparger and all other elements of the bioreactor vessel and exhaust decomposition system are as previously described. Thus, for instance, the bioreactor vessel can comprise a plurality of first inlets, first outlets, second inlets, and second outlets, and further comprise a first circulation line connecting one of the first outlets to one of the first inlets that re-supplies to the first inlet at least some of the first fluid that is discharged from the first outlet; and/or a second circulation line connecting one of the second outlets to one of the second inlets that re-supplies to the second inlet at least some of the second fluid that is discharged from the second outlet. Also, as described with respect to the exhaust gas decomposition system, the first fluid can flow as a thin-film through at least part of the flow path from the first inlet to the first outlet. The thin-film fluid flow is as previously described. The bioreactor can further comprise a filler, sprayer, or any other feature described herein with respect to the exhaust gas decomposition system, which can include multiple reactor vessels connected in series or parallel. All other features of the method are as described with respect to the exhaust gas decomposition system.

Hereinafter, examples of one or more embodiments will be described in detail with reference to the following examples. However, these examples are not intended to limit the scope of the one or more embodiments.

(Preparation of strain decomposing fluorine-containing compound)

Preparation Example 1: Selecting *Bacillus saitens* strain having capability of decomposing $CF_4$

Some of sludge in waste water released from the factory of Samsung Electronics Co., Ltd. in Giheung was cultured in a medium, and then strains from top 2% exhibiting excellent proliferation were selected. After confirming that the selected strains had capability of decomposing $CF_4$, the strains underwent gene sequence analysis.

6 contigs obtained by next-generation sequencing (NGS) were assembled, and a final size of the genome thus obtained was 5.2 Mb. As a result of annotation, 5,210 genes existed in the genome. As a result of phylogenetic tree analysis, it was confirmed that the genome belonged to the genus *Bacillus.* However, a sequence of the genome did not precisely match with any conventional species that belong to the genus *Bacillus.* The genome only had a sequence identity of 98 % or lower with the species.

The microorganism thus obtained was named as *Bacillus saitens* and deposited with the Korean Collection for Type Cultures (KCTC) on Feb. 28, 2017, and received the accession number KCTC 13219 BP.

Example 1: Vertical glass Dimroth coiled reflux condenser including sparger, BF1 strain

As shown in FIG. 9, 40 ml of an LB medium and 200 ppm of $CF_4$ gas were injected to a glass Dimroth reflux condenser that was sterilized at a high temperature and arranged in a vertical direction (having a reactor length of 700 mm, an external diameter of 35 mm, and an internal volume of 300 mL).

A microporous sparger was positioned at a lower part of the condenser so as to face a bottom of the condenser from a side wall of the condenser. A pore size of the microporous sparger was 10 $\mu$m.

Then, the *Bacillus saitens* strains selected in Preparation Example 1 were inoculated into the LB medium in the glass straight tube condenser by using a syringe. An initial concentration of the inoculated strain in the LB medium was 5.0 based on OD@600nm. The strain-inoculated LB medium and CF4 gas were each circulated.

The LB medium was supplied via an inlet at an upper part of the glass Dimroth coiled tube reflux condenser, flowed along an interior side wall of the condenser, and discharged via an outlet at a lower part of the condenser. The discharged LB medium was re-supplied to the inlet along a circulation line by a liquid pump. A circulation rate was set so that a predetermined depth of the LB medium filled the lower part of the condenser.

$CF_4$ gas in the form of air bubble was supplied into the LB medium filling the lower part of the condenser via the microporous sparger connected to an inlet of a lower part of the glass Dimroth coiled tube reflux condenser, flowed along the internal side wall, and exhausted via an outlet at an upper part of the condenser. The exhuasted $CF_4$ gas was re-supplied to the inlet along a circulation line by a gas pump, and an amount of $CF_4$ gas was confirmed in real time by using an FT-IR gas analyzer connected to the circulation line. A circulation rate of $CF_4$ gas was 10 volume per volume per minute (vvm), which was a volume of circulated $CF_4$ gas per a unit volume of the LB medium per minute.

Although not shown in FIG. 9, an external jacket of the glass straight tube condenser was connected to a constant-temperature bath to maintain the temperature. An internal temperature of the condenser was maintained at 30 °C, and a pressure in an interior of the condenser was 1 atm.

In the reactor, a volume ratio of the LB medium and $CF_4$ gas was maintained 1:7.

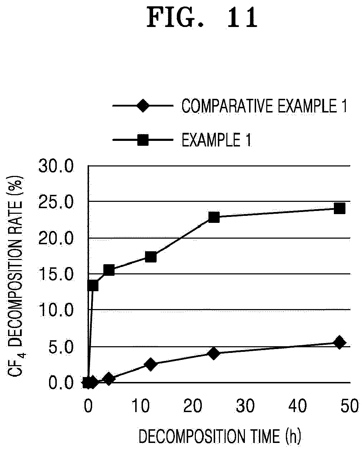

An amount of $CF_4$ gas in the condenser according to time was obtained by using an FT-IR gas analyzer, and a rate of decomposing $CF_4$ was calculated according to Equation 1. The results are shown in Table 1 and FIG. 11.

Equation 1

$$\text{Rate of decomposing } CF_4 = [(\text{Initial amount of } CF_4 - \text{amount of } CF_4 \text{ after a time of } x \text{ hour}) / \text{initial amount of } CF_4] \times 100$$

Comparative Example 1: Vertical glass Dimroth coiled tube reflux condenser not including sparger, BF1 strain

Comparative Example 1 was carried out in the same conditions and the same manner as in Example 1, except that a vertical glass Dimroth coiled tube reflux condenser (having a reactor length of 550 mm, an external diameter of 35 mm, and an internal volume of 200 mL) not including a sparger, as shown in FIG. 10, was used instead of the vertical glass Dimroth coiled tube reflux condenser including a sparger.

An amount of $CF_4$ gas in the condenser according to time was obtained by using an FT-IR gas analyzer, and a rate of decomposition of $CF_4$ was calculated according to Equation 1. The results are shown in Table 1 and FIG 11.

Comparative Example 2: Glass serum bottle, BF1 strain

40 mL of the LB medium and 200 ppm of $CF_4$ gas, which are the same as used in Example 1, were added to a 75 ml glass serum bottle. After maintaining the glass serum bottle for 48 hours in a shaking incubator at a speed of 230 rpm and at a temperature of 30°C, the amount of $CF_4$ gas in the glass serum bottle was confirmed by TF-IR gas analyzer. Here, the decomposition rate of $CF_4$ was calculated according to Equation 1, and results thereof are shown in Table 1 (not shown in FIG. 1). The initial concentration of the inoculated strain in the LB medium was 0.5 at OD of 600 nm and other conditions were the same as those of Example 1.

Table 1

|  | Elapsed time [hr] | Decompositon rate of $CF_4$ [%] |
|---|---|---|
| Example 1 | 48 | 24.0 |
| Comparative Example 1 | 48 | 5.5 |
| Comparative Example 2 | 48 | less than 5.0 |

As shown in Table 1 and FIG. 11, in the exhaust gas decomposition system of Example 1 including a sparger, a rate of decomposition of $CF_4$ significantly improved in a shorter period of time compared with that of the exhaust gas decomposition system of Comparative Example 1, which did include a sparger. It is understood that the rate of decomposition of $CF_4$ improved due to an increase in a contact area between the LB medium and $CF_4$ gas, which was caused by the sparger as well as a thin film of the LB medium formed on a side wall of a vessel and the $CF_4$ gas moving in opposite directions. Further, in the exhaust gas decomposition system of Example 1 including a sparger and circulation system, a rate of decomposition of $CF_4$ much more significantly improved in a shorter period of time compared with that of the exhaust gas decomposition system of Comparative Example 2, which did not include a sparger and not include the circulation system.

In addition, the sparger was positioned facing the bottom of the vessel, and the $CF_4$ gas moved toward the lid of the vessel after it was sprayed to the bottom of the vessel, and thus a period of time for which the LB medium and $CF_4$ gas contacted each other increased.

As described above, according to one or more embodiments, when a fluorine-containing compound is injected in the form of air bubbles into a fluid including a biological catalyst, since the biological catalyst and the fluorine-containing compound circulate in directions opposite to each other in an exhaust gas decomposition system, a rate of decomposition of a fluorine-containing compound may improve.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The phrases "at least one" and "one or more" are considered to be synonomous and interchangeable. The use of the term "at least one" or "one or more" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Moreover, any combination of the above-described elements in all possible variations thereof is encompassed by the invention unless otherwise indicated herein or otherwise clearly contradicted by context.

**Claims**

1. An exhaust gas decomposition system comprising:

   one or more bioreactors, wherein each bioreactor comprises:

   a bioreactor vessel;
   one or more first inlets configured to supply a fluid to the interior of the bioreactor vessel;
   a supply of a first fluid comprising a biological catalyst that decomposes a fluorine-containing compound connected to at least one of the one or more first inlets;
   one or more first outlets configured to discharge the first fluid from the bioreactor vessel;
   one or more second inlets configured to supply a fluid to the interior of the bioreactor vessel;
   a supply of a second fluid comprising a fluorine containing compound connected to at least one of the one or more second inlets;
   one or more second outlets configured to discharge the second fluid from the bioreactor vessel; and
   one or more spargers disposed in the interior of the bioreactor vessel and connected to at least one of the one or more second inlets;

   wherein:

   the one or more first inlets and the one or more first outlets are disposed such that a first fluid flow moves in a first direction in the interior of the vessel,
   the one or more second inlets and the one or more second outlets are disposed such that a second fluid flow moves in a second direction different from the first direction in the interior of the vessel, and
   the sparger is disposed such that the first fluid and the second fluid contact each other.

2. The exhaust gas decomposition system of claim 1, wherein the first fluid is a liquid that includes a biological catalyst, and the second fluid is a gas that includes a fluorine-containing compound.

3. The exhaust gas decomposition system of claim 1 or 2, wherein,
   the interior of the bioreactor vessel is defined by a side wall, a lid, and a bottom, and wherein:

   a) at least one first inlet and at least one second outlet is disposed directly on or adjacent to the lid,
   at least one first outlet and at least one second inlet is disposed directly on or adjacent to the bottom,
   and the sparger extends from at least one second inlet; or
   b) when a first fluid partially fills the interior of the bioreactor vessel, the interior of the bioreactor vessel is devided into a first interior region defined by the bottom, a portion of the side wall adjacent to the bottom, and a horizontal surface of the first fluid partially filling the interior of the vessel; and a second interior region defined by the lid, a portion of the side wall adjacent to the lid, and the surface of the first fluid partially filling the interior of the vessel;

   and wherein the sparger is disposed in the first interior region and located in the 1/3 volume of the vessel adjacent the bottom;
   and wherein most preferably at least a portion of the first fluid flow forms a thin-film with a thickness of 10 mm or less that is substantially parallel to the side wall and disposed along the side wall of the vessel.

4. The exhaust gas decomposition system of any one of claim 1 to 3, wherein the sparger is a microporous sparger that has a pore size in a range of 0.1 $\mu$m to 100 $\mu$m.

5. The exhaust gas decomposition system of any one of claim 1 to 4, wherein the reaction vessel comprises more than one first outlet, first inlet, second outlet, and second inlet, and further comprises:

   a first circulation line that connects one of the first outlets to one of the first inlets and is configured to re-supply to the first inlet at least some of the first fluid that is discharged from the first outlet; and
   a second circulation line that connects one of the second outlets to one of the second inlets and is configured to re-supply to the second inlet at least some of the second fluid that is discharged from the second outlet.

6. The exhaust gas decomposition system of any one of claim 1 to 5, wherein the second direction in which the second fluid flow moves is opposite to the first direction in which the first fluid flow moves.

7. The exhaust gas decomposition system of any one of claim 2 to 6, wherein the bioreactor vessel comprises the first fluid and second fluid in a volume ratio of 1:1 to 1:20, and/or wherein the fluorine-containing compound has a water-solubility of 0.01 vol% or lower at a temperature of 20 °C.

8. The exhaust gas decomposition system of any one of claim 1 to 7, further comprising a structure disposed in the interior of the vessel that increases a contact area between the first fluid and the second fluid, wherein the structure preferably includes at least one selected from a reflux tube and a filler material, and wherein the reflux tube most preferably includes at least one selected from a straight tube and a coiled tube.

9. The exhaust gas decomposition system of any one of claim 1 to 8, further comprising at least one of a sprayer that is connected to at least one of the one or more first inlets and sprays the first fluid to the interior of the vessel.

10. The exhaust gas decomposition system of any one of claim 1 to 9 comprising two or more bioreactor vessles connected in series or in parallel.

11. The exhaust gas decomposition system of any one of claim 1 to 10, wherein the fluorine-containing compound is a compound represented by one of Formulae 1 to 3:

$$\text{Formula 1} \qquad C(R_1)(R_2)(R_3)(R_4)$$

$$\text{Formula 2} \qquad (R_5)(R_6)(R_7)C\text{-}[C(R_{11})(R_{12})]_n\text{-}C(R_8)(R_9)(R_{10})$$

$$\text{Formula 3} \qquad S(R_{13})(R_{14})(R_{15})(R_{16})(R_{17})(R_{18})$$

wherein, in Formulae 1 to 3,

n is an integer in a range of 1 to 10,
$R_1, R_2, R_3,$ and $R_4$ are each independently F, Cl, Br, I, or H, provided that at least one of $R_1, R_2, R_3,$ and $R_4$ is F, and $R_5, R_6, R_7, R_8, R_9, R_{10}, R_{11}$ and $R_{12}$ are each independently F, Cl, Br, I or H, provided that at least one of $R_5, R_6, R_7, R_8, R_9, R_{10}, R_{11}$ and $R_{12}$ is F, and
$R_{13}, R_{14}, R_{15}, R_{16}, R_{17},$ and $R_{18}$ are each independently F, Cl, Br, I, or H, provided that at least one of $R_{13}, R_{14}, R_{15}, R_{16}, R_{17},$ and $R_{18}$ is F, wherein the fluorine-containing compound preferably includes at least one selected from $CH_3F, CH_2F_2, CHF_3, CF_4,$ and $SF_6$.

12. The exhaust gas decomposition system of any one of claim 1 to 11, wherein the first fluid comprises at least one selected from an enzyme that catalyzes the decomposition of a F-C bond, a microorganism that catalyzes the decomposition of a F-C bond, and a KCTC 13219BP strain of *Bacillus saitens.*

13. The exhaust gas decomposition system of any one of claim 1 to 12, further comprising:

a first fluid supplier for supplying the first fluid into the exhaust gas decomposition system;
a second fluid supplier for supplying the second fluid into the exhaust gas decomposition system; and
a first collector and a second collector each collecting a decomposition product discharged from the exhaust gas decomposition system, wherein the first fluid supplier preferably includes a species incubator, the second fluid supplier preferably includes a pre-processor, and the first collector preferably includes a condenser.

14. A method of decomposing an exhaust gas, the method comprising contacting a first fluid including a KCTC 13219BP strain of *Bacillus saitens* with a second fluid including a fluorine-containing compound, wherein the contacting of the first fluid with the second fluid is preferably performed by sparging the second fluid in the first fluid.

15. The method of claim 14, wherein the first fluid and second fluid are contacted in a bioreactor vessel of an exhaust gas decomposition system according to any one of claim 1 to 13.

# FIG. 1

# FIG. 2

# FIG. 3

# FIG. 4

# FIG. 5

# FIG. 6

# FIG. 7

100

22a  10a          22b  10b          22c  10c

40          40          40

21a          21b          21c

14a          14b          14c

# FIG. 8

1000

200

30

100

400

40

300

500

# FIG. 9

# FIG. 10

# FIG. 11

Europäisches
Patentamt

European
Patent Office

Office européen
des brevets

# EUROPEAN SEARCH REPORT

**Application Number**

EP 18 21 5315

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 3 329 981 A2 (SAMSUNG ELECTRONICS CO LTD [KR]) 6 June 2018 (2018-06-06) * paragraphs [0030], [0035], [0037]; figures 2, 4-6, 9 * | 1,3,6, 8-10 | INV. B01D53/84 B01D53/86 B01D53/78 |
| X | US 2007/178578 A1 (CHALMER PAUL D [US] ET AL) 2 August 2007 (2007-08-02) * paragraphs [0024] - [0026]; figure 2 * | 1-13 | |
| X | US 2009/250396 A1 (YAMASAKI KAZUYUKI [JP] ET AL) 8 October 2009 (2009-10-08) * paragraphs [0109] - [0130]; figure 1 * | 1-13 | |
| E | EP 3 434 792 A1 (SAMSUNG ELECTRONICS CO LTD [KR]) 30 January 2019 (2019-01-30) * paragraphs [0007], [0008], [0041] - [0045]; figure 6 * | 1,14,15 | |

**TECHNICAL FIELDS SEARCHED (IPC)**

B01D

The present search report has been drawn up for all claims

| Place of search | Date of completion of the search | Examiner |
|---|---|---|
| The Hague | 17 April 2019 | Artos Fernández, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 21 5315

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2019

| Patent document cited in search report | | | Publication date | Patent family member(s) | | | Publication date |
|---|---|---|---|---|---|---|---|
| EP | 3329981 | A2 | 06-06-2018 | CN | 108144434 | A | 12-06-2018 |
| | | | | EP | 3329981 | A2 | 06-06-2018 |
| | | | | KR | 20180063752 | A | 12-06-2018 |
| | | | | US | 2018154308 | A1 | 07-06-2018 |
| US | 2007178578 | A1 | 02-08-2007 | NONE | | | |
| US | 2009250396 | A1 | 08-10-2009 | JP | 3974928 | B1 | 12-09-2007 |
| | | | | JP | 2007326008 | A | 20-12-2007 |
| | | | | KR | 20090018639 | A | 20-02-2009 |
| | | | | TW | 200812922 | A | 16-03-2008 |
| | | | | US | 2009250396 | A1 | 08-10-2009 |
| | | | | WO | 2007142004 | A1 | 13-12-2007 |
| EP | 3434792 | A1 | 30-01-2019 | EP | 3434792 | A1 | 30-01-2019 |
| | | | | KR | 20190011119 | A | 01-02-2019 |
| | | | | US | 2019022445 | A1 | 24-01-2019 |

EPO FORM P0459

For more details about this annex : see Official Journal of the European Patent Office, No. 12/82